(19) **Europäisches Patentamt / European Patent Office / Office européen des brevets**

(11) **EP 3 382 370 A1**

(12) # EUROPEAN PATENT APPLICATION

(43) Date of publication:
03.10.2018 Bulletin 2018/40

(51) Int Cl.:
*G01N 11/10* (2006.01)

(21) Application number: 17163749.9

(22) Date of filing: 30.03.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **University Of Oulu**
**90014 University of Oulu (FI)**

(72) Inventors:
• **Czajkowski, Jakub**
**90014 University of Oulu (FI)**
• **Fabritius, Tapio**
**90014 University of Oulu (FI)**
• **Kinnunen, Päivö**
**90014 University of Oulu (FI)**

(74) Representative: **Berggren Oy, Helsinki & Oulu**
**Isokatu 32**
**90100 Oulu (FI)**

(54) **PROBE ARRANGEMENT AND METHOD FOR RHEOMETRIC MEASUREMENTS WITH A DISPOSABLE PROBE AND REMOTE READABILITY**

(57) The present invention introduces an arrangement and a method for measuring rheometric parameters of a fluid (22) quantitatively with a disposable probe (21, 21', 21 "). The probe (21, 21', 21") may be hermetically sealed and it can be fully immersed within even opaque fluid. A magnetic field angle sensor (18, 18', 18") measures the change of an angle of the probe (21, 21', 21") resulting from an instantly changed external magnetic field. The external magnetic field can be created by two pairs of orthogonally placed coils (12a-d, 12") or by some other means capable to create a rotating magnetic field within the sample with the probe (21, 21', 21 "). By using a modified Kelvin-Voigt or a modified Jeffreys model, the oscillation graph will reveal viscosity, elasticity or viscoelasticity of the examined fluid (22). The measurement can be parallelized by having an array of sample wells with probes (21') to be measured simultaneously, or by having a round-plated test platform for measuring the varying samples in a sequential fashion. There can also be individual magnetic field creation means (12") for each sample well with the probe 21", applying also an array of magnetic field angle sensors (18"). The measurements can be controlled by a PC (15) and with a special I/O module or coil driving means (13, 13', 13"), where the PC (15) can also be used to show the oscillation graphs and the rheometric parameter results to the user via a display (16).

Figure 2

**Description**

**Field of the invention**

The present invention relates to rheometers, i.e. devices which measure flows and characteristics of fluidic substances.

**Background of the invention**

Rheology is a study concentrating on the flow of matter, which is usually in a liquid state or which can be described as a "soft solid material". Examples of interesting materials and substances comprise fluids such as blood, sludge, suspensions, polymers, and food. Generally, rheometry is applicable in manufacturing and processing of chemicals, oils, medicines, special coatings, paints, food and drinks, cosmetics, inks, mineral slurries (e.g., in mining industry), and in research conducted in academic institutions. Rheometry can be used to e.g. optimize properties of materials or substances, or to avoid possible error situations in advance by measuring the rheological parameters of the product e.g. within a manufacturing line of the product. Generally, rheometric measurements are often highly useful as a helping tool in process control.

Rheological parameters comprise viscosity and elasticity of the material in the most usual case. Viscosity is an important parameter for sensing the flowability of the liquid- or gel-based substance, for instance. In addition, product quality assurance is a useful application area, because rheological properties of materials have direct influence on quality, reliability, durability, and also consumer's perception of the developed product.

Generally, rheological characteristics may have an influence on shearing properties, on optical, magnetic or electrical behavior, on mechanical strength or elasticity, on thermal stability, on wetting properties and on coalescence, flocculation or sedimentation processes of the materials.

A non-published patent application filed in 30 September 2015 by Oulu University, EP 15187524.2 ("Kinnunen 1"), discloses a method for measuring viscoelastic properties of fluids and its use in measuring biofilms. In Kinnunen 1, a sensor is placed in the material sample, e.g., in a sample well, and an oscillating magnetic field is created in the material sample volume, and the sensor sets off to a rotating motion within the fluid based on the created magnetic force. The relative angle of the sensor is tracked as a function of time. If there are so-called underdamped oscillations visible in the angular data of the sensor, it is determined that the measured fluid sample is viscoelastic, i.e. both viscous and elastic. The sensor can be formed from a single or several discs placed on top of one another, or as a single rod or elongated element. Four rod-shaped magnetic coils are placed around the sample well approximately in a square-shaped arrangement. The sensor may include a ring magnet, and the tracking step can be performed by an optical camera looking at the rotating sensor from on top or beneath the sample well.

US 2014/047903 ("Sakai 1") discloses also a measurement method for viscosity/elasticity using a floating rotor in a sample container filled with examined fluid. Sakai 1:s method does not seem to measure the viscoelasticity but merely the viscosity of the measured material. Furthermore, Sakai 1 is not an online measurement method.

US 6,691,560 ("Abnett") discloses a free rotor viscometer, with no mechanical connection between the rotor and the rotor drive source. The rotor is however mounted on low friction bearings, and external electromagnets create a torque to the rotor. The fluid viscosity affects the rotation rate of the rotor. The test chamber for the fluid may be sealed. Abnett is purely a viscosity measuring method, with no mention of any elasticity measurement.

In prior art, where a multi-disc structure has been used in the probe, the discs and the gaps between them have to be cleaned after each time of use, still having the potential of remaining contamination. This makes the use of the measurement system slower, and also the measurement process will become unnecessarily complex.

In prior art, there has not been disclosed a remotely readable and disposable, and thus safe and cost-efficient sensor arrangement for measuring the rheological parameters of substances.

Also, a problem in prior art has been that the presented methods commonly result in binaric type of results for viscosity or viscoelasticity; i.e. the measurement just reveals whether the substance is viscoelastic to some extent or not at all. This is rather inaccurate information for many application areas.

**Summary of the invention**

The present invention discloses an arrangement for measuring rheometric parameters of fluids. This is a first aspect of the inventive idea. The arrangement comprises:

- a probe, with a magnet fixed to the probe, where the probe is configured to be partially or fully immersed in a fluid to be measured within a sample well;

- external magnetic field creation means for creating an external magnetic field;

- coil driving means and control means for feeding and measuring electric currents within the magnetic field creation means;

- a magnetic field angle sensor for sensing the angular direction of the probe as a function of time; wherein

- the direction of the external magnetic field is configured to be instantly changed by the magnetic field creation means, which coupled with inertia of the probe and properties of the fluid, results in an oscillating motion of the probe within the fluid; and

- the control means is configured to calculate at least one rheometric parameter of the fluid based on the angular direction of the probe as a function of time.

In an embodiment of the invention, the external magnetic field creation means comprise two pairs of orthogonally placed coils located around a single sample well or an array of sample wells.

In an embodiment of the invention, the rheometric parameters comprise quantitative values or viscosity, elasticity and viscoelasticity.

In an embodiment of the invention, the probe is made of plastic with a magnet fixed to the plastic probe.

In an embodiment of the invention, the probe comprises a plastic wrapped around the magnet.

In an embodiment of the invention, the shape of the probe comprises one of the following: parallel round-shaped interconnected disks or plates, a plate or a plate-plate structure, a cylinder- or oval-shaped rod, a pill-shaped element, a stir bar, a tapered cone, a structure comprising at least one vane, a structure comprising a cylinder or several concentric cylinders, a structure with a cup and a bob, a structure comprising a cone and a plate, or a couette-type of structure.

In an embodiment of the invention, the control means applies a modified Kelvin-Voigt model or a modified Jeffreys model in the calculations of the rheometric parameters, where the friction present in the oscillations is also taken into account.

In an embodiment of the invention, the arrangement comprises a rotatable disk-shaped test plate, where a group of sample wells are placed, and where the measurement is arranged as consequential measurements for the group of sample wells.

In an embodiment of the invention, the arrangement comprises a planar array of sample wells, each sample well comprising the probe, and the arrangement further comprises a printed circuit board which comprises an array of magnetic field angle sensors.

In an embodiment of the invention, the arrangement comprises individual external magnetic field creation means for each pair of a probe and a magnetic field angle sensor.

In an embodiment of the invention, the probe is hermetically sealed, or the sample well comprising the probe is hermetically sealed.

According to a second aspect of the inventive idea, the present invention comprises a corresponding method for measuring rheometric parameters of fluids. The method comprises the following steps:

- immersing a probe, with a magnet fixed to the probe, partially or fully in a fluid to be measured within a sample well;

- creating an external magnetic field by external magnetic field creation means;

- feeding and measuring electric currents within the magnetic field creation means by coil driving means and control means;

- sensing the angular direction of the probe as a function of time by a magnetic field angle sensor;

- changing the direction of the external magnetic field instantly by the magnetic field creation means, which coupled with inertia of the probe and properties of the fluid, results in an oscillating motion of the probe within the fluid; and

- calculating at least one rheometric parameter of the fluid by the control means based on the angular direction of the probe as a function of time.

**Brief description of the drawings**

Figure 1a illustrates the observation arrangement of the fluidic sample for determining possible viscoelasticity of the fluid, according to "Kinnunen 1",

Figure 1b illustrates a more detailed observation arrangement of the fluidic sample for determining rheometric parameters, with the applied forces and created oscillating movements shown as well, with a rotor formed from parallel round-shaped interconnected disks,

Figure 1c illustrates a rod-shaped probe rotating around a vertical axis within the measured fluid,

Figure 1d illustrates a circuit model according to Kelvin-Voigt, applicable in an embodiment of the invention,

Figure 1e illustrates a circuit model according to Jeffreys, applicable in an embodiment of the invention,

Figure 2 illustrates a rotating disk-shaped test plate with a group of sample wells,

Figure 3a illustrates a test sample well arrangement formed as an array of disposable containers,

Figure 3b illustrates an arrangement where an independent magnetic field is created for each sample well within an array of sample wells, and

Figure 4 illustrates various possible embodiments regarding the shapes for the rotating probe.

## Detailed description of the invention

The present invention discloses a method and arrangement for measuring rheometric parameters of various fluidic materials by a disposable rheometric sensor (i.e. rheometer). Such a sensor is a reliable, accurate, disposable and still cost-efficient probe, i.e. rheometer.

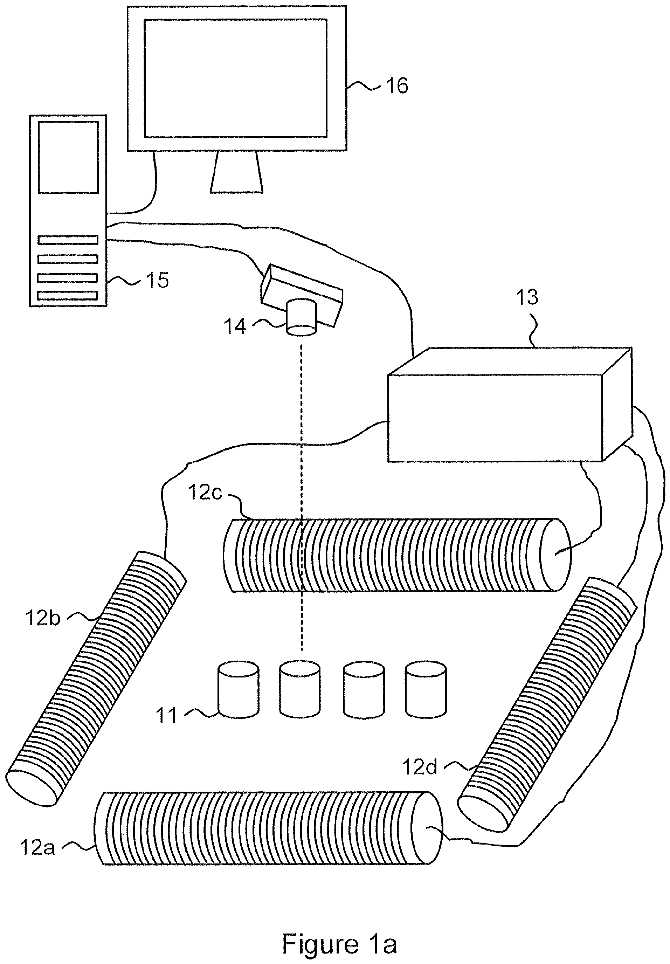

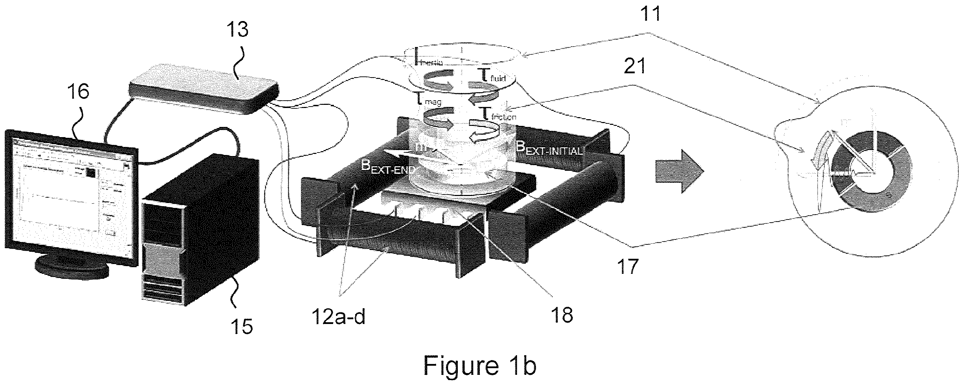

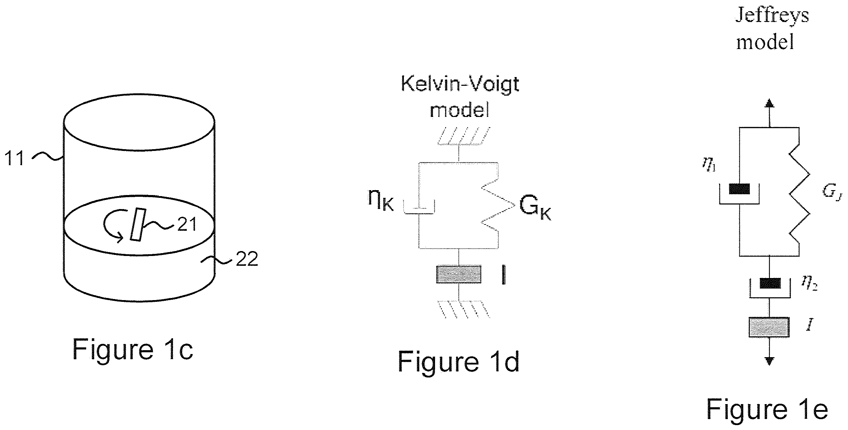

Figure 1 a illustrates a basic arrangement for measuring viscoelasticity of a liquid in a sample well, according to the non-published patent application "Kinnunen 1". This embodiment applies optical sensing of the rotary element by a camera locating on top of the arrangement. The arrangement for rheometric measurements comprise four rod-type coils 12a-d which are placed in locations forming principally a square with 90 degrees mutual angles between each of coil pairs. The wells 11 containing the fluidic sample are placed in the middle of the coils. A signal receiver and current amplifier 13 acts as a driving element for the coils, i.e. feeding the electric current to the coils in a controlled manner (i.e. "coil driving means 13" or an I/O module which mean the same element). This results in a controlled magnetic field in a volume comprising the well 11 with the sample. The PC 15 controls the signal receiver and current amplifier 13. The PC can also handle some measurements through the signal receiver, e.g. by measuring an induced current in a coil resulting from the magnetic field generated by some or all other coils. The information can be output by the screen 16 connected to the PC 15. In this embodiment, a camera 14 is placed on top of the well, and therefore the magnetic rotor or rod must be visible despite the presence of the fluid, i.e. the fluid must be transparent if the rotary element is submerged in the liquid.

When the magnitude and/or direction of the magnetic field is changed instantly, the probe within the well will react to this force, but at the same time, the liquid will affect the movement of the probe through its viscous and/or elastic properties. The change of the magnetic field may be a change to another value ($T_1$ -> $T_2$) or it may be performed by switching the magnetic field totally off ($T_1$ -> 0). This sudden force may result in overdamped or underdamped oscillations for the probe depending on the magnetic field change and the liquid characteristics. The movement of the probe is tracked from the image obtained by the camera 14 and shown in the display 16. The PC may utilize image analysis tools in order to e.g. track the angle of the probe as a function of time, and save these results into a database, either locally, or to a cloud service.

We next refer to Figure 1b which shows a more detailed observation arrangement of the fluidic sample for determining rheometric parameters, with the applied forces and created oscillating movements shown as well, and using a rotor 21 formed from parallel round-shaped interconnected disks. This shape is also merely an example of all various possible probe shapes.

In the present invention, one simple option is to create an external magnetic field by two pairs of coils 12a-d which are placed as two orthogonal pairs, forming a near square-shaped form with all the four rod-shaped coils 12a-d. Together with a controlling computer (PC 15), and an appropriate I/O module (or a coil driving means) 13, the coils 12a-d are fed with electrical signals in a controllable manner so that the electric current flowing through the coils 12a-d creates a magnetic field around each coil. With all four coils present and driven with electric currents, the resulting magnetic field is a sum of four magnetic fields created by the four coils 12a-d.

Other possible options comprise using another kind of a 3-phase magnetic field creation means, e.g. through a single magnetic field creation element. Also it is possible that each pair of coils consists of a series of coils of each side of the sample well or sample well arrangement. The point is to obtain a rotating magnetic field, no matter how it is created or which element or elements are used for this purpose.

The rotor probe 21 is provided with a magnet 17 fixed to it, for instance as attached in the bottom of the rotor probe 21. Before the actual measurement is started, the probe 21 is placed within the fluid to be measured, e.g. in a test well 11 containing the fluid. The probe 21 can thus be immersed fully or partially in the fluid. The test well 11 can be a beaker or container or receptacle wherein the studied solution is poured. The probe 21 can be for instance an elongated small rod-shaped element, but many other shapes are also possible; these are covered in detail later. The probe 21 can be a freely floating element within the fluid, where the probe 21 is not fixed to any fixed element or structure. Alternatively, a larger rotor can be used which can be lowered into the well 11 by a vertical thin shaft, which also forms the rotational axis for the rotor.

The beaker or well 11 can be placed on top of a field angle sensor 18, which is a horizontal element below the probe 21 with its magnet 17. The field angle sensor 18 acts as a sensing element for the angular direction of the magnet 17, and thus, the field angle sensor 18 is connected to the I/O module 13. This element in practice replaces the optical camera 14 from Figure 1 a. The field angle sensor 18 is capable of recording the angular position of the probe in a continuous manner.

The created summed magnetic field e.g. from the four coils 12a-d (referring here to the first simple embodiment, but any other magnetic field creation means is also possible) will thus create a torque to the magnet 17, and thus, to the rotor probe 21 as well. This results in a rotational movement of the probe 21. When the orientation of the magnetic field is instantly changed, the fixed magnet 17 forces the rotating probe 21 to follow according to the changed force now affecting the probe 21. Rapid acceleration and high inertia of the probe 21 means that the probe will not stop exactly at the final position defined by the magnetic field, but the probe 21 will oscillate. These oscillations are damped by the fluid, where the fluid characteristics have an effect on these oscillations.

The different forces affecting the probe 21 are visible in Fig. 1b where $I_{inertia}$, $T_{mag}$, $T_{fluid}$ and $T_{friction}$ are four forces affecting the rotor. The inertia of the probe slows the reaction time for the probe due to changing torques. Magnetic force is created externally e.g. by the four coils 12a-d through the I/O module 13. Fluidic force means the viscosity and elasticity of the studied solution affecting the oscillation curve obtained later. Frictional forces are resulting from, e.g. such a situation, where the rotor probe 21 is fixed to a vertical thin rod from above the beaker, thus adding some frictional torque because the rotor is not freely rotatable within the fluid. Of course some added friction can result from physical contact between the probe and the inside walls of the beaker or well 11. The latter case is still an undesirable situation within the test arrangement.

The right-most section of Fig. 1b shows the sample well 11 from the above. $B_{EXT\text{-}INITIAL}$ is the magnetic force vector resulting in a given angle of the probe 21. When the magnetic field is changed, the new resulting angle for the probe is defined by the new magnetic force vector $B_{EXT\text{-}END}$. Because the fluid has rheometric properties with viscosity and/or elasticity, the end angle is not instantly achieved, but the probe angle will be changing in an oscillating manner, see the figure. The oscillation pattern is dependent on the measured solution and this piece of data can be fed through the I/O module 13 to the PC 15, and the oscillation curve as a function of time may be presented on the computer screen 16. Further analysis tools or software may be used to calculate various parameters from the measurement results. In a useful embodiment, the tool is used to calculate viscosity of the fluid and the elasticity of the fluid in an accurate manner. The results can be saved to the PC 15 and if desired, fed to a cloud service for subsequent use and e.g. for gathering of big data from various measurements over a long period.

Figure 1c shows the sample well 11 with a rod-shaped probe as a simplified closer look of the situation. The well 11 is provided with the examined liquid material (fluid 22) e.g. through pipetting the solution or substance to the well 11. The magnetic probe 21 is here illustrated as a simple short rod, whose angle can be easily tracked, when the probe is rotating in the liquid around a vertical axis. Still, many other probe forms are possible; these are extensively discussed later.

Going now to theoretical issues based in the viscosity and elasticity calculations, we discuss one possible model in this regard, a Kelvin-Voigt model, which models the characteristics of materials by putting a purely viscous damping element and purely elastic spring element in parallel with one another. The Kelvin-Voigt circuit model is shown in Figure 1d as well. According to this model, if stress is σ and strain is ε, there can be determined a dependence between the two as a function of time as follows:

$$\sigma(t) = E\varepsilon(t) + \eta \frac{d\varepsilon(t)}{dt} \text{ where} \qquad (1)$$

E is the modulus of elasticity and η is the viscosity of the material.

Thus, the studied fluid can be assumed to be purely Newtonian matter, and therefore, the viscosity of the studied fluid dampens the oscillations. Viscosity is $\eta_K$ in the circuit model.

The external magnetic field created by the coils results in the component $\mathbf{G_K}$ in the circuit model.

The inertia of the magnet and the rotor assembly is depicted by the component $\mathbf{I}$.

For more complex fluids and materials, Jeffreys model could be applied, in an embodiment of the invention. Jeffreys model is shown also in Figure 1e.

In the Jeffreys model, $\mathbf{G_J}$ represents a spring, similarly as the $G_K$ in the Kelvin-Voigt model. Elements $\eta_1$ and $\eta_2$ represent viscosities in form of two dashpots. Component $\mathbf{I}$ represents the inertia of the magnet and the rotor assembly also in the Jeffreys model.

Alternatively, some other circuit model may also be applicable in the present arrangement.

The interaction between the external magnetic field and an embedded magnet has elastic properties. Still, inertia of the probe (magnet and rotor assembly) results in the fact that a substantial amount of energy can be stored in the system in order for the oscillations to occur. These oscillations are damped by the fluid, based on its properties such as viscosity, and therefore, the oscillations usually dampen to near zero in a few seconds in one embodiment of the invention. Therefore, the measurement method is quick to perform and therefore very useful for quick testing. Actually, the possibility to measure quick viscoelasticity changes will reveal completely new information about the properties of complex materials and their flow characteristics.

The angle information as a function of time, together with the equation (1) results in analysis results where $\mathbf{E}$ and $\eta$ of the tested solution can be accurately obtained. In order words, the viscosity, elasticity or viscoelasticity parameters of the fluid are obtained.

Generally, the higher the frequency of the oscillations, it means less viscous fluid. When the viscosity is very high (like for a mixture with 90-95 % of glycerol and the rest is water), the oscillations do not usually occur anymore but the resulting final angle is slowly achieved through asymptotical convergence (meaning an "overdamped oscillation"). When true oscillations are present, they can be called as underdamped oscillations. Regarding very highly viscous materials, such as even higher concentrations of glycerol than the above mentioned example (such as pure glycerol), the present invention can however still operate well in case a higher inertia probe, a lower surface area probe, or a higher external magnetic field magnitude is selected to be used.

The friction, which is present in the end phase of the oscillations, is actually not taken into account in the basic Kelvin-Voigt or Jeffreys model. Still, friction is present all the time and especially, when the oscillations are already significantly damped, the friction becomes even a more prominent factor in the system. The oscillation frequency in that basic model is constant, thus meaning the lack of analysis for the friction present in the true-world situation. In the present invention, however, the friction is taken into account because the presence of friction leads to the oscillation frequency getting lower towards the end of the oscillations. Thus, the method according to the present invention enhances the accuracy of the rheometric parameter results in this regard even to a greater extent. With a modified Kelvin-Voigt model and a modified Jeffreys model we mean the corresponding basic models added with the idea that the friction present in the oscillations is also taken into account.

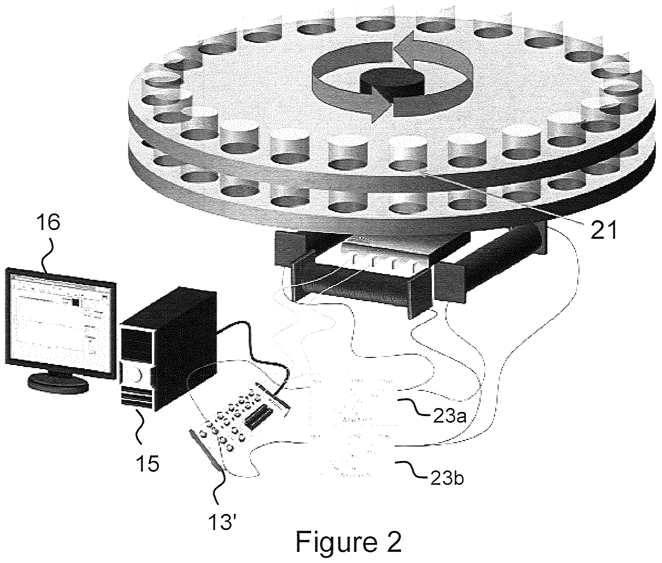

In another embodiment of the arrangement according to the invention, Figure 2 illustrates a rotating disk-shaped test plate with a group of sample wells. This embodiment can be applied especially in antibiotic testing, but also other types of solutions can be tested in this kind of setup. The setup gives possibilities to rapid screening applications. As shown in Figure 2, there is a round-shaped test plate or several test plates stacked on top of one another which are provided with a number of cavities or through-holes so that a group of sample wells can be placed in given locations near the outer edge of the round test plates. The sample wells are placed in round-shaped arrangement as well. The test plate arrangement is rotatable around a vertical axis. As in the previous embodiments, the rest of the components can be the same, comprising the four coils, the field angle sensor, the I/O card (module) 13', the PC 15, the display 16, and an amplifier element "1" for the first parallel pair of coils, and an amplifier element "2" for the second parallel pair of coils. These two amplifier elements 23a-b can also be comprised in the embodiments of Figures 1a and 1b, although those embodiments show this part of the system in a different manner.

In the arrangement of Figure 2, each container encompasses a rheometer probe, which is a disposable probe. For instance microbial culture fluid can be fully enclosed in a container, where also the container can be disposable. In one example, each container or sample well may contain a different formulation of an investigated antibiotic substance. Container 21 is the currently investigated container, under which there is the field angle sensor. A single well can be measured in a few seconds, after which the test plate rotates a step so that the next sample well moves on top of the center of the field angle sensor. The measurement is repeated and the rotational movement is once more repeated. In this way, a sequential and quick measurement method is created.

The containers and probes are disposable in the case where the microbial culture is not environmentally dangerous and if they do not pose a danger to living organisms or humans or animals either. Because the containers and probes can be manufactured from plastic, they are recyclable as well in case this is desired. The containers can be fully sealed hermetically in one embodiment. The hermetic sealing can be obtained by packing the probe and the container with the examined fluid in a plastic wrapping.

Furthermore, as already mentioned above, the probe itself can be manufactured from plastic. The probe then comprises the magnet in addition to the plastic parts.

In an embodiment, the plastic base section can be adhered to the magnet. In another embodiment, the plastic base section of the probe totally surrounds the magnet and thus, the plastic outer layer of the probe hermetically protects the magnet from the measured fluid. This is especially useful if the magnet is reused later.

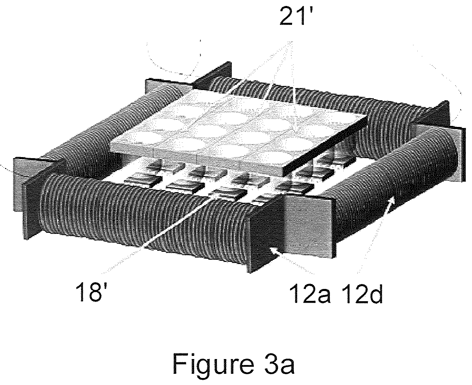

Figure 3a illustrates a test sample well arrangement formed as a planar array of disposable containers. In this embodiment, the sample wells or containers with probes 21' are placed in an array form, which in this example is a 4*4 square-shaped test plate. The test samples, i.e. fluid containers with probes 21', can be placed in the test plate so that all spots are filled with a container. The magnetic coils (12a and 12d are marked) are placed the same way as in the earlier embodiments. However, a single field angle sensor is now replaced with a PCB which comprises an array of field angle sensors 18'. With this kind of an arrangement, several rheometric measurements can be performed at the same time. If the containers contain the same solution, this kind of arrangement can be used in enhanced quality through averaging all the obtained results. On the other hand, this averaging can be used for analyzing different solutions or different concentrations of mixed substances, for instance, in order to obtain simultaneous rheometric parameter results for the whole array of samples. Of course, the array size can be manufactured as large as the application requires, and at the same time, the PCB array size can be enlarged as well; e.g. to comprise 8*8 or 12*12 samples and angle sensors. In an embodiment, also non-squared matrix dimensions can be used for the sample array and for the PCB elements, when the created magnetic field is intelligently handled and driven.

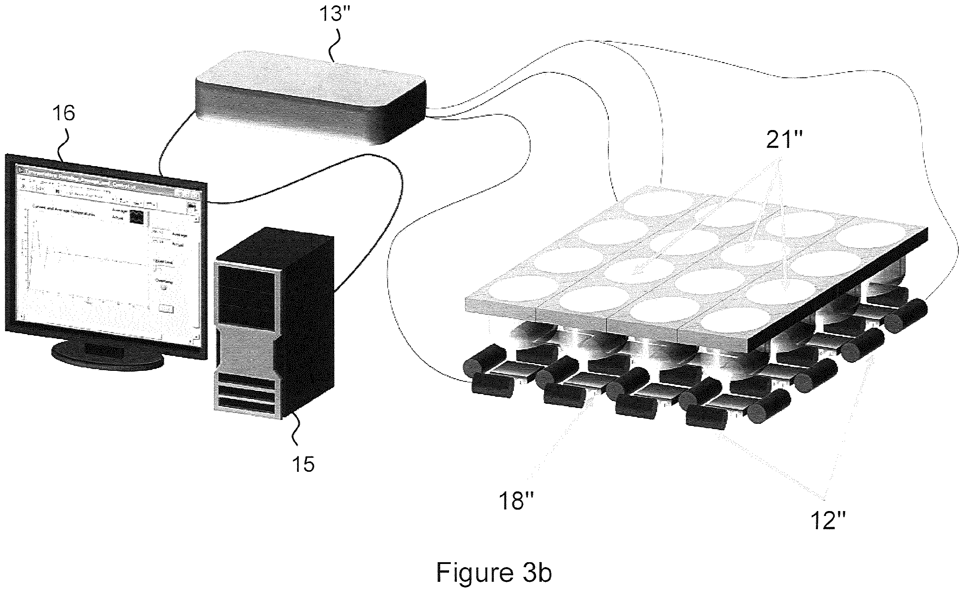

Figure 3b illustrates another possible version of this arrangement, where each pair comprising a sensor 18" and a probe 21" has its individual coils 12", so that they can act simultaneously, but still in an independent manner. The PC with measurement software 15 is able to show the measurement results by its display 16. I/O module 13" acts similarly as in the previous embodiments. In this time, the array of coils 12" are connected in pairs so that each probe 21" can be operated individually. In this embodiment, the fluid containers with disposable probes 21" are arranged as a two-dimensional array which can be a square-shaped array like in Figure 3b. Some other form like a rectangular m*n-array is also possible. Under each sample well comprising the probe 21 ", there is a separate magnetic field angle sensor 18". In this embodiment, each sample well with its own probe can be independently controlled for creating a desired external rotating magnetic field.

The measurements can be performed simultaneously or in consequential manner, or in otherwise controlled manner. Furthermore, the samples may have different substances, which are selected to be measured. Still, the arrangement can be used to measure a lot of samples originating from the same source (the same substance) at the same time or consequently, and such results can be further e.g. averaged in order to obtain even more reliable results of the rheometric parameters of the substance.

In an embodiment of the invention, broad range of frequencies and measurement times can be used. Also, there is no need for mechanical connection or visible optical path between the probe and the field angle sensor; therefore, containers can be hermetically sealed. This gives possibilities to measure even volatile and/or hazardous materials. Furthermore, because the probe is disposable and non-hazardous, this eliminates the need for cleaning the probe after each measurement. This increases measurement quality and throughput, and also reduces costs. Also the risk of contamination of the measured solution or the probe is virtually non-existent.

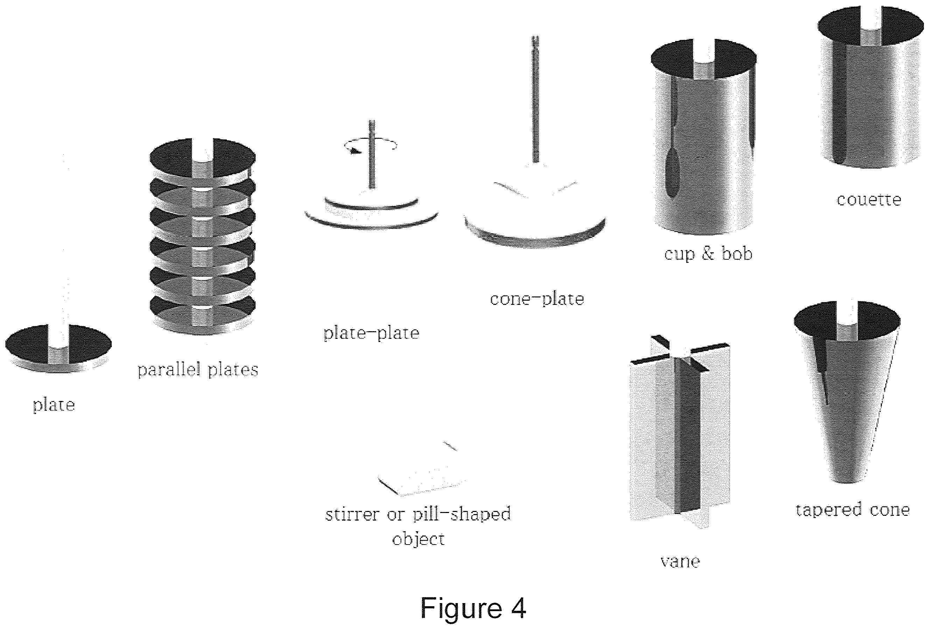

Properties of the used probe may still vary, regarding its geometry, mass and dimensional size (affecting its inertia), the magnetic moment of the fixed magnet and friction in general. Regarding possible shapes of the used probes, various different shapes are applicable in the present invention. These shapes comprise a tapered (plug) cone, parallel plated structure, a plate or a plate-plate (= two plates) structure, a vaned structure (with "wings"), a concentrically cylindrical geometry (with e.g. a spindle, inner bob and outer cup), a couette-type of structure, and a cone and plate geometry (with spindle as well). These kinds of structures are also depicted in Figure 4. The shown shapes are merely examples of possible forms available for the rotating probe.

Furthermore in an embodiment, the probe may have an oval shape or a pill-shaped form, shown also in Figure 4. This can also be called as a stirrer or a stir bar.

For highly viscous fluids, such substances tend to accumulate between disks of a parallel disk type of probe. This phenomenon changes the inertia of the probe which would be seen in corresponding measurement graphs. However, this problem of the parallel disk type of probe can be mitigated by using e.g. a vane-shaped probe with highly viscous liquids.

Furthermore, the probe structure according to the invention has several unique features and advantages over the prior art rheometric probes. The probe itself can be manufactured by using fully disposable and recyclable materials, while the magnet can be reused. Furthermore, the size of the probe is not restricted; i.e. probe can be a small stir bar or a large rotor. Also, most of the already existing probe geometries are possible in this invention. Furthermore, the probe can be partially or fully immersed in the examined fluid, and thus, there is no requirement for transparency of the examined liquid because the opaqueness does not affect the angle measurement with the presented way. Furthermore, the measurement of a single measurement is very rapid; usually it is finished within few seconds. Also, the measurement procedure can be kept the same all the time regardless of the used probe and its characteristics (such as the shape or the size of the probe). Furthermore, the probe data is remotely readable, which is a significant advantage in usability of the invention.

Some characteristics required from a good rheometric sensor or device comprise the accuracy of the measurement results, short measurement time and fast result delivery (even in a few seconds), low amount of waste of the analysed material itself, no contamination in the measurement samples, easiness of operation and automation capabilities of the performed measurement through parallel measurements, the versatility of the method and the physical setup, low costs of the used materials including the maintenance costs for the sensor, and also a low unit cost for the measurement system are preferable characteristics. The present invention fulfils all these criteria.

The present invention has the following additional advantages. The measured liquid does not need to be transparent; thus, also e.g. opaque colored liquids can be measured as well. The probe system can be hermetically sealed and thus, kept with having no physical contact directly to the measured liquid. This gives the possibility to test even more harmful substances as well, such as samples with bacterial and viral content, without having to duly clean the probe afterwards for re-use. Also toxic and corrosive substances could be tested. Because the sensor is disposable after use, there is no contamination and thus, no need for complex cleaning processes after the actual measurement. Furthermore, because a large group of parallel measurements can be performed either simultaneously or in quick sequential fashion, the system obtains a lot of information in which some selection, filtering or averaging can be performed. In this way, non-reliable measurement results can be cleaned away from the database, making the results more reliable and accurate.

Finally, the main advantage over prior art is that with the presented arrangement and calculations, the invention gives accurate quantitative values for viscosity and elasticity (and viscoelasticity), and not just the qualitative results of many prior art publications where binary results are merely obtained ("viscous substance" or "not viscous substance").

Also because the cost of a single measurement container with the probe is very inexpensive, it is cost-effective to dispose the probe after the measurement so that the cleaning costs are avoided. The total costs of the arrangement and the measurement method are thus very cheap per unit measurement.

Furthermore, in the embodiment of Figure 3b, the arrangement can be operated so that there is no need to load all the sample wells at the same time nor to start all the tests at the same time. This makes the measurement arrangement temporally very flexible as well.

The calculations discussed above can be implemented by at least one computer program, which is executable in the control means, i.e. by the processor of the computer 15. Related databases and memories can be used in storing the used parameters and measured results.

The presented method and arrangement correspond to each other, in other words, all embodiments relating to the arrangement can also be applied as various embodiments of the corresponding method.

The present invention is not restricted merely to the embodiments disclosed above but the present invention may vary within the scope defined by the claims.

**Claims**

1. Arrangement for measuring rheometric parameters of fluids, **characterized in that** the arrangement comprises:

    - a probe (21, 21', 21 "), with a magnet (17) fixed to the probe, where the probe is configured to be partially or fully immersed in a fluid (22) to be measured within a sample well (11);
    - external magnetic field creation means (12a-d, 12") for creating an external magnetic field;
    - coil driving means (13, 13', 13") and control means (15) for feeding and measuring electric currents within the magnetic field creation means (12a-d, 12");
    - a magnetic field angle sensor (18, 18', 18") for sensing the angular direction of the probe (21, 21', 21 ") as a function of time; wherein
    - the direction of the external magnetic field is configured to be instantly changed by the magnetic field creation means (12a-d, 12"), which coupled with inertia of the probe (21, 21', 21") and properties of the fluid, results in an oscillating motion of the probe within the fluid (22); and
    - the control means (15) is configured to calculate at least one rheometric parameter of the fluid (22) based on the angular direction of the probe (21, 21', 21") as a function of time.

2. The arrangement according to claim 1, **characterized in that** the external magnetic field creation means (12a-d, 12") comprise two pairs of orthogonally placed coils located around a single sample well or an array of sample wells (11).

3. The arrangement according to claim 1 or 2, **characterized in that** the rheometric parameters comprise quantitative values or viscosity, elasticity and viscoelasticity.

4. The arrangement according to any of claims 1-3, **characterized in that** the probe (21, 21', 21 ") is made of plastic with a magnet fixed to the plastic probe.

5. The arrangement according to any of claims 1-3, **characterized in that** the probe (21, 21', 21 ") comprises a plastic wrapped around the magnet (17).

6. The arrangement according to any of claims 1-5, **characterized in that** the shape of the probe (21, 21', 21") comprises one of the following: parallel round-shaped interconnected disks or plates, a plate or a plate-plate structure, a cylinder- or oval-shaped rod, a pill-shaped element, a stir bar, a tapered cone, a structure comprising at least one vane, a structure comprising a cylinder or several concentric cylinders, a structure with a cup and a bob, a structure comprising a cone and a plate, or a couette-type of structure.

7. The arrangement according to any of claims 1-6, **characterized in that** the control means (15) applies a modified Kelvin-Voigt model or a modified Jeffreys model in the calculations of the rheometric parameters, where the friction present in the oscillations is also taken into account.

8. The arrangement according to any of claims 1-7, **characterized in that** the arrangement comprises a rotatable disk-shaped test plate, where a group of sample wells (11) are placed, and where the measurement is arranged as consequential measurements for the group of sample wells.

9. The arrangement according to any of claims 1-7, **characterized in that** the arrangement comprises a planar array of sample wells, each sample well comprising the probe (21'), and the arrangement further comprises a printed circuit board which comprises an array of magnetic field angle sensors (18').

10. The arrangement according to any of claims 1-7, **characterized in that** the arrangement comprises individual external magnetic field creation means (12") for each pair of a probe (21") and a magnetic field angle sensor (18").

11. The arrangement according to any of claims 1-10, **characterized in that** the probe (21, 21', 21 ") is hermetically sealed, or the sample well (11) comprising the probe is hermetically sealed.

12. A method for measuring rheometric parameters of fluids, **characterized in that** the method comprises the following steps:

- immersing a probe (21, 21', 21 "), with a magnet (17) fixed to the probe, partially or fully in a fluid (22) to be measured within a sample well (11);
- creating an external magnetic field by external magnetic field creation means (12a-d, 12");
- feeding and measuring electric currents within the magnetic field creation means (12a-d, 12") by coil driving means (13, 13', 13") and control means (15);
- sensing the angular direction of the probe (21, 21', 21 ") as a function of time by a magnetic field angle sensor (18, 18', 18");
- changing the direction of the external magnetic field instantly by the magnetic field creation means (12a-d, 12"), which coupled with inertia of the probe (21, 21', 21") and properties of the fluid, results in an oscillating motion of the probe within the fluid (22); and
- calculating at least one rheometric parameter of the fluid (22) by the control means (15) based on the angular direction of the probe (21, 21', 21") as a function of time.

Figure 1a

Figure 1b

11

21

22

Figure 1c

Kelvin-Voigt
model

$\eta_K$

$G_K$

I

Figure 1d

Jeffreys
model

$\eta_1$

$G_J$

$\eta_2$

$I$

Figure 1e

Figure 2

21'

18'

12a 12d

Figure 3a

Figure 3b

EP 3 382 370 A1

couette

tapered cone

cup & bob

vane

cone-plate

plate-plate

stirrer or pill-shaped object

parallel plates

plate

Figure 4

Europäisches
Patentamt

European
Patent Office

Office européen
des brevets

# EUROPEAN SEARCH REPORT

**Application Number**

EP 17 16 3749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/193398 A1 (GRAICHEN KURT [DE] ET AL) 7 July 2016 (2016-07-07) | 1-8, 10-12 | INV. G01N11/10 |
| A | * paragraphs [0002], [0014], [0057], [0060], [0066], [0016], [0017]; figure 4 * <br> * paragraph [0017] * | 9 | |
| E | EP 3 150 987 A1 (UNIV OF OULU [FI]) 5 April 2017 (2017-04-05) <br> * paragraphs [0034], [0047], [0045], [0049], [0050]; claim 1; figures 1,2 * | 1,12 | |
| A | US 2011/036150 A1 (SAKAI KEIJI [JP]) 17 February 2011 (2011-02-17) <br> * claim 1; figure 1 * | 2,3 | |
| A | US 2006/100493 A1 (STRASSLER SIGFRID [CH] ET AL) 11 May 2006 (2006-05-11) <br> * paragraph [0022] * | 4,5 | |
| A | US 2016/274012 A1 (SAKUMA ATSUSHI [JP] ET AL) 22 September 2016 (2016-09-22) <br> * paragraph [0111] * | 7 | TECHNICAL FIELDS SEARCHED (IPC) <br><br> G01N |
| A | US 3 798 960 A (GLASS J) 26 March 1974 (1974-03-26) <br> * column 3, line 53 - line 55 * | 8 | |
| A | US 2010/116034 A1 (ABBOTT SCOT D [US] ET AL) 13 May 2010 (2010-05-13) <br> * paragraphs [0028], [0030]; figure 2 * | 9 | |

The present search report has been drawn up for all claims

| Place of search | Date of completion of the search | Examiner |
|---|---|---|
| The Hague | 29 September 2017 | Reeb, Bertrand |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 382 370 A1**

## ANNEX TO THE EUROPEAN SEARCH REPORT
## ON EUROPEAN PATENT APPLICATION NO.

EP 17 16 3749

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2017

| Patent document cited in search report | Publication date | Patent family member(s) | Publication date |
|---|---|---|---|
| US 2016193398 A1 | 07-07-2016 | CN 102741677 A | 17-10-2012 |
| | | EP 2333514 A1 | 15-06-2011 |
| | | EP 2507613 A1 | 10-10-2012 |
| | | US 2012291527 A1 | 22-11-2012 |
| | | US 2016193398 A1 | 07-07-2016 |
| | | WO 2011063994 A1 | 03-06-2011 |
| EP 3150987 A1 | 05-04-2017 | NONE | |
| US 2011036150 A1 | 17-02-2011 | CN 102016542 A | 13-04-2011 |
| | | DE 112009001023 T5 | 07-07-2011 |
| | | JP 5093599 B2 | 12-12-2012 |
| | | JP 2009264982 A | 12-11-2009 |
| | | US 2011036150 A1 | 17-02-2011 |
| | | WO 2009131185 A1 | 29-10-2009 |
| US 2006100493 A1 | 11-05-2006 | AT 444706 T | 15-10-2009 |
| | | AU 2003269666 A1 | 13-05-2004 |
| | | BR 0306653 A | 05-10-2004 |
| | | CA 2503896 A1 | 06-05-2004 |
| | | CH 696259 A5 | 15-03-2007 |
| | | CN 1708254 A | 14-12-2005 |
| | | EP 1415590 A1 | 06-05-2004 |
| | | EP 1555933 A1 | 27-07-2005 |
| | | JP 2006503678 A | 02-02-2006 |
| | | KR 20050055043 A | 10-06-2005 |
| | | TN SN04093 A1 | 01-06-2006 |
| | | US 2006100493 A1 | 11-05-2006 |
| | | WO 2004037079 A1 | 06-05-2004 |
| | | YU 47204 A | 25-05-2006 |
| US 2016274012 A1 | 22-09-2016 | JP WO2015059878 A1 | 09-03-2017 |
| | | US 2016274012 A1 | 22-09-2016 |
| | | WO 2015059878 A1 | 30-04-2015 |
| US 3798960 A | 26-03-1974 | AU 5702873 A | 19-12-1974 |
| | | BE 801084 A1 | 18-12-1973 |
| | | CA 974792 A | 23-09-1975 |
| | | CH 567260 A5 | 30-09-1975 |
| | | DE 2330946 A1 | 10-01-1974 |
| | | FR 2190269 A5 | 25-01-1974 |
| | | GB 1399783 A | 02-07-1975 |
| | | IT 990754 B | 10-07-1975 |
| | | JP S4953089 A | 23-05-1974 |
| | | JP S5331756 B2 | 04-09-1978 |
| | | NL 7308236 A | 21-12-1973 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 17 16 3749

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2017

| Patent document cited in search report | Publication date | Patent family member(s) | Publication date |
|---|---|---|---|
| | | US 3798960 A | 26-03-1974 |
| | | ZA 7303991 B | 29-01-1975 |
| US 2010116034 A1 | 13-05-2010 | NONE | |

For more details about this annex : see Official Journal of the European Patent Office, No. 12/82

EPO FORM P0459

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 15187524 A
- US 2014047903 A
- US 6691560 B